# EUROPEAN PATENT SPECIFICATION

(11) **EP 1 271 493 B1**
(45) Date of publication and mention of the grant of the patent: **14.11.2012**
(21) Application number: 02254227.8
(22) Date of filing: 18.06.2002
(51) Int. Cl.: G11B 7/09

(54) **Optical pickup actuator driving method**
Treiberverfahren für Stellantrieb eines optischen Abtastgeräts
Méthode de commande d'un actionnneur pour appareil de lecture optique

(30) Priority: 19.06.2001 KR 2001034687
(43) Date of publication of application: 02.01.2003
(73) Proprietor: Samsung Electronics Co., Ltd., Suwon-si, Gyeonggi-do, 443-742 (KR)
(72) Inventor: Song, Byung-youn, Suwon-si, Gyeonggi-do (KR); Shin, Kyung-sik, 105-401 Suji-Jukjeon Dongbu Apt., Yongin-si, Gyeonggi-do (KR)
(74) Representative: Robinson, Ian Michael

(56) References cited:
- EP-A2- 1 098 304
- JP-A- 7 065 397
- JP-A- 8 203 103
- JP-A- 10 116 431
- US-A- 5 663 840
- US-A- 5 905 255

## Description

The present invention relates to an optical pickup actuator driving method, and more particularly, to a method for driving an optical pickup actuator in which coil for driving an optical pickup in a focus direction, a track direction, and a tilt direction, respectively, are arranged ideally to minimise the number of coils and to increase free space on the bobbin.

In general, optical pickups are adopted in optical recording/reproducing apparatuses. An optical pickup performs recording and/or reproduction of information with respect to a recording medium such as an optical disk placed on a turntable in a non-contstep manner while moving in a radial direction of the optical disk.

The optical pickup includes an objective lens for forming a light spot on the optical disk by focusing light emitted from a light source, and an actuator for controlling the objective lens in a track direction, a focus direction, and a tilt direction so that the light spot formed by the objective lens can be accurately located on the optical disk.

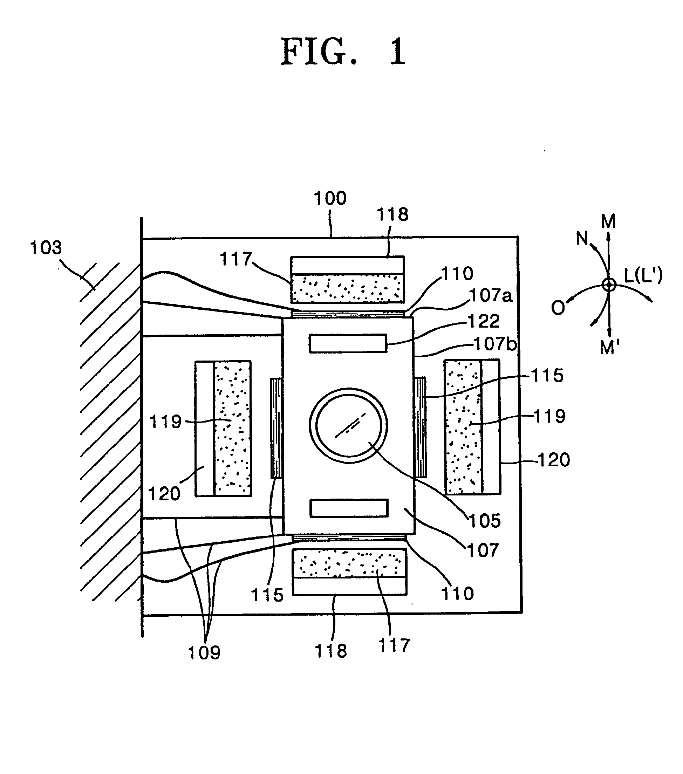

The optical pickup actuator includes a double axes driving actuator for driving the optical pickup in the track direction and the focus direction. Recently, for high density recording, as the N/A of the objective lens recently increases and the wavelength of a laser decreases, margin in tilt of the optical pickup actuator decreases. To compensate for the reduced tilt margin, three axes or four axes driving actuators capable of driving an optical pickup in the tilt direction are needed in addition to the existing double axes driving actuator. The three axes driving means driving in the focus direction, the track direction, and the tilt direction. The four axes driving means driving in the focus direction, the track direction, a tilt radial direction, and a tilt tangential direction. Referring to Figure 1, the focus direction, the track direction, the tilt radial direction, and the tilt tangential direction are indicated by L-L', M-M', N, and O, respectively.

Referring to Figure 1, a conventional optical pickup actuator includes a base 100, a holder 103 fixed to the base 100, a bobbin 107 where an objective lens is mounted, wires 109 connecting the bobbin 107 to the holder 103, and a magnetic driving portion for moving the bobbin 107 in the track direction, the focus direction, or the tilt direction.

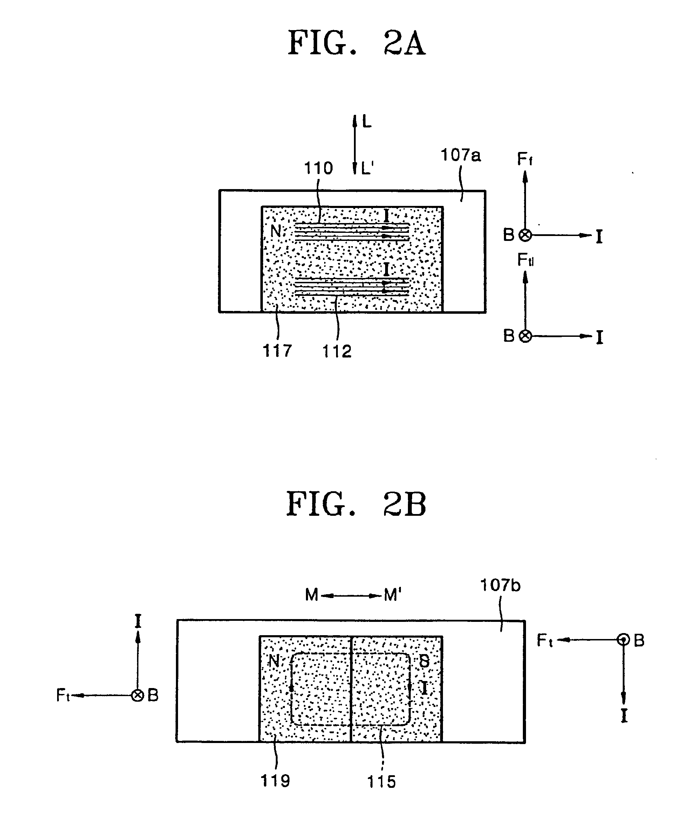

The magnetic driving portion includes a couple of a focus coil 110 and a tilt coil 112 (referring to Figure 2A) provided at each of the opposite side surfaces 107a of the bobbin 107, a track coil 115 arranged at the other side surfaces 107b where the focus coil 110 and the tilt coil 112 are not arranged, first and second magnets 117 and 119 installed on the base 100 to face the focus coil 110, the tilt coil 112, and the track coil 115 with a predetermined interval. Also, outer yokes 118 and 120 for fixing the first and second magnets 117 and 119 are installed on the base 100. Inner yokes 122 are installed on the base 100 at a position facing the first magnet 117 to guide the bobbin 107. The outer yokes 118 and 120 and the inner yokes 122 guide path of magnetism generated by the first and second magnets 117 and 119 to direct a desired location.

Each of the wires 109 has one end soldered to both side surfaces of the bobbin 107 and the other end connected to the holder 103 and is electrically connected to a circuit portion for applying current to the magnetic driving portion.

In Figure 2A, an example of the polarity of the magnet and the direction of current is schematically shown to disclose the relationship of forces by the interstepion between the focus coil 110 and the tilt coil 112, and the first magnet 117 corresponding thereto. Here, the focus coil 110 provided at each of the opposite side surfaces 107a of the four side surfaces of the bobbin 107 receives a force F_{f} by Fleming's left hand rule so that the bobbin 107 is moved in the focus direction L. When the direction of the current changes to the opposite, the focus coil 110 receives a force in the opposite direction L'.

In the meantime, the tilt coil 112 is provided at both side surfaces 107a of the bobbin 107, forming a couple with the focus coil 110, and intersteps with the first magnet 117. Here, when the same current flowing the opposite directions are applied to the tilt coils 112, the forces Fₜᵢ received by the both tilt coils 112 become opposite so that the optical pickup is driven in the tilt direction, in particular, in the radial tilt direction (N).

Also, in Figure 2B, an example of the polarity of the magnet and the direction of current are schematically shown to disclose the relationship of forces by the interstepion between the track coil 115 and the second magnet 119 corresponding thereto. The direction and magnitude of forces between the magnet and the coil is determined by Fleming's left hand rule. Thus, the track coil 115 provided at each of the two side surfaces 107b of the fourth side surfaces of the bobbin 107 where the focus coil 110 and the tilt coil 112 are not arranged receives the force Fₜ in the track direction by the second magnet 119 so that the bobbin 107 moves in the track direction M. Here, when the direction of current I changes to the opposite, the track coil 115 receives a force in the opposite direction M'.

Typically, six wires 109 of the actuator are provided for the driving in the focus direction, the track direction, and the tilt direction. Further, more wires can be needed for the four axes driving actuator. However, since the optical pickup actuator is very small, when all four side surfaces of the bobbin 107 are used to install the focus coil, the track coil, or the tilt coil according to the conventional technology, no sufficient space is present for installation of the wire 109. In addition, when the number of wires increases, it is very difficult to attach the wires in a small space so that a defective ratio increases accordingly.

Also, when the coils are arranged using all four side surfaces of the bobbin 107, wiring of the coils is complicated. Also, since the magnet is provided at each of the focus coil, the tilt coil, and the track coil, the number of part increases so that productivity is lowered. In addition, since interference with a spindle motor (not shown) for disc rotation is generated by the first magnet 117 for the focus coil arranged at the left and right sides of the bobbin 107, the spindle motor is not accurately controlled.

JP 07 065397 shows an optical pickup having tilt coils attached to the side surface of an objective lens holder, magnets, U-shaped yokes and supporting materials. The objective lens holder can be freely tilted with respect to a pedestal. The inclination of the optical axis of the beam projected from the objective lens and the recording surface of an optical disk is detected by diameter direction inclination detectors and circumferential direction inclination detectors. Based on an error signal from the inclination detector, the tilt coils are energised so that the optical axis of the objective lens can be corrected at a high speed.

JP 10 116431 shows an optical pickup wherein sides excepting the effective sides of tilt coils are placed on a position with low magnetic flux density of a magnetic gap peripheral part. Thus, even when a current is allowed to flow through the tilt coils, the force moving a movable part in the other direction such as the tracking direction, doesn't increase in the tracking direction, focus direction, and tangential direction, and a stable servo and a proper recording/reproducing signal are realised.

It is an aim of the present invention to provide an optical pickup actuator driving method in which coils for driving an objective lens in the focus direction, the track direction, and the tilt direction are arranged so that a sufficient space can be obtained on side surfaces of the bobbin and driving is controlled to minimise a number of parts required.

According to the present invention, there is provided a method of driving an optical pickup actuator as set forth in the appended claims

For a better understanding of the invention, and to show how embodiments of the same may be carried into effect, reference will now be made, by way of example, to the accompanying diagrammatic drawings in which:
Figure 1 is an exploded perspective view of a conventional optical pickup actuator;
Figures 2A and 2B are views showing the relationship between the magnet and coil of the optical pickup actuator of Figure 1;
Figure 3 is an exploded perspective view of an optical actuator according to a preferred embodiment of the present invention;
Figure 4 is a plan view of the preferred optical pickup actuator;
Figure 5 is a view showing the preferred relationship in arrangement of the magnet and coil of the optical pickup actuator;
Figure 6 is a view showing the relationship in forces steping between the magnet and a fine pattern coil of the optical pickup actuator according to the preferred Embodiment of the present invention;
Figures 7A through 7C and Figure 8A through 8C are view showing waveforms of input signals to implement an optical pickup actuator driving method according to the preferred embodiment of the present invention; and
Figure 9 is a circuit diagram to implement the optical pickup actuator driving method according to the preferred embodiment of the present invention.

Before the description of a preferred method for driving an optical pickup actuator according to the present invention, an example optical pickup actuator to which the present invention is adopted is described as fellows.

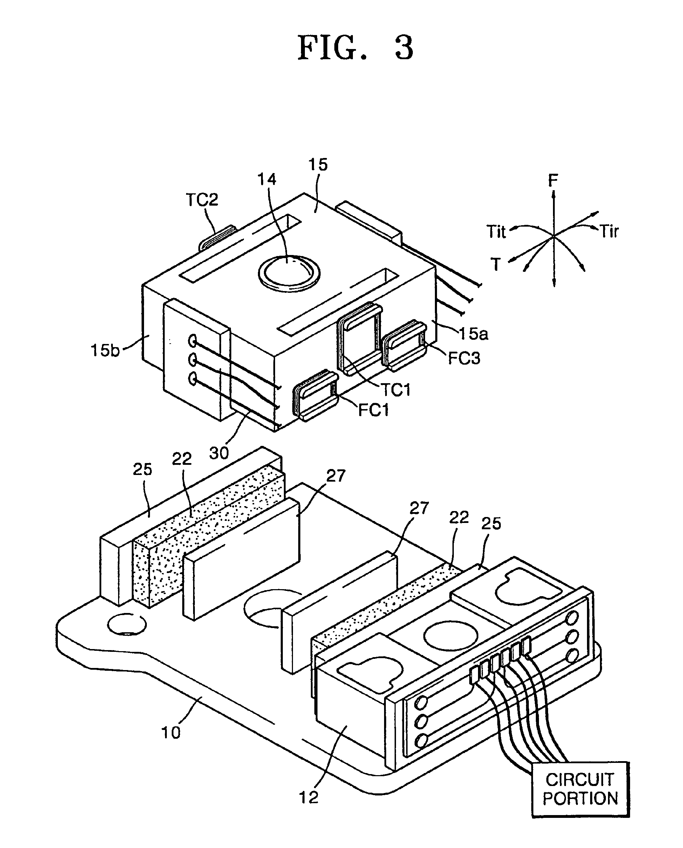

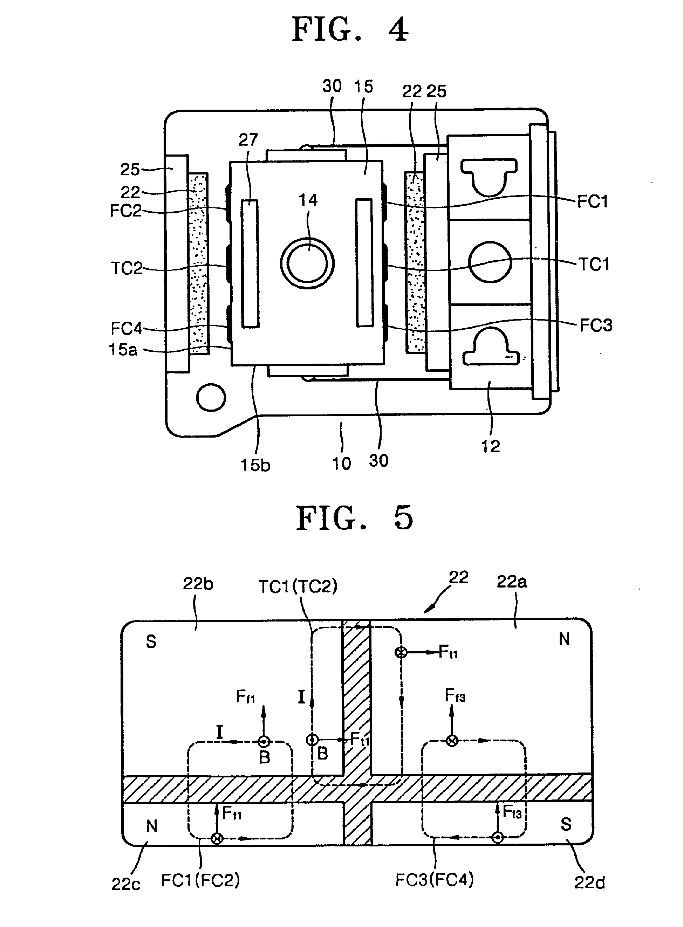

Referring to Figures 3 and 4, an optical pickup actuator according to a preferred embodiment of the present invention includes a base 10, a holder 12 provided at one side of the base 10, a bobbin 15 on which an objective lens 14 is mounted, and a magnetic driving portion for driving the bobbin 14 in a focus direction, a tilt direction, and a track direction.

The magnetic driving portion includes at least one focus and tilt coil, a track coil, which are provided at each of opposite side surfaces 15a of the bobbin 15, and a magnet arrangement 22 installed to face the focus and tilt coil and the track coil. For example, the focus and tilt coil may be first, second, third, and fourth focus and tilt coils FC1, FC2, FC3, and FC4 while the track coil may be first and second track coils TC1 and TC2 each of which is provided at each of two opposite side surfaces of the bobbin 15. Here, the first through fourth focus and tilt coils FC1, FC2, FC3, and FC4 and the first and second track coils TC1 and TC2 are all arranged at two opposing side surfaces 15a of the bobbin 15. A support member 30 for supporting the bobbin 15 capable of moving and simultaneously applying current to the first through fourth focus and tilt coils FC1, FC2, FC3, and FC4 and the first and second track coils TC1 and TC2 is arranged at each of the other two opposing side surfaces 15b of the bobbin 15 where the coils are not arranged. The support member 30 may be wires or leaf springs.

As shown in Figures 3 and 4, the preferred bobbin 15 is generally rectangular. The focus and tilt coils and the track coils are arranged on opposing first and second sides of the bobbin. The support members 30 are arranged on the other opposing third and fourth sides of the bobbin.

In the optical pickup actuator having the above structure, the first through fourth focus and tilt coils FC1, FC2, FC3, and FC4 are controlled to drive the object lens 14 both in the focus direction and the tilt direction.

The magnet arrangements 22 are divided by four, for example, as shown in Figure 5. That is, the magnet arrangement 22 is divided into four sections in which N poles and 5 poles are appropriately distributed. For the convenience of explanation, the four divided magnet includes a first divided pole 22a, a second divided pole 22b, a third divided pole 22c, and a fourth divided pole 22d. The first divided pole 22a is an N pole, a second divided pole 22b is an S pole, a third divided pole 22c is an N pole, and a fourth divided pole 22d is an S pole. The focus and tilt coils FC1, FC2, FC3, and FC4 and the track coils TC1 and TC2 are arranged corresponding to the respective surface polarization 22a, 22b, 22c, and 22d of the magnet arrangement 22.

For example, each of the track coils TC1 and TC2 is arranged to face both of the first and second surface polarization 22a and 22b of the magnet arrangement 22, as shown in Figure 5. A couple of the first and third focus and tilt coils FC1 and FC3 are provided at the one side surface of the bobbin 15 and the other couple of the second and fourth focus and tilt coils FC2 and FC4 are provided at the other side surface of the bobbin 15. The first or second focus and tilt coil FC1 or FC2 can be arranged to face both of the second and third surface polarization 22b and 22c while the third or fourth focus and tilt coil FC3 or FC4 can be arranged to face both of the first and fourth surface polarization 22a and 22d.

Alternatively, the magnet arrangement 22 may be a magnet having two surface polarization. For example, a set of two magnets each having two surface polarisation can be arranged to be separated a predetermined distance from each other to face the focus and tilt coils FC1, FC2, FC3, and F4 and the track coils TC1 and TC2.

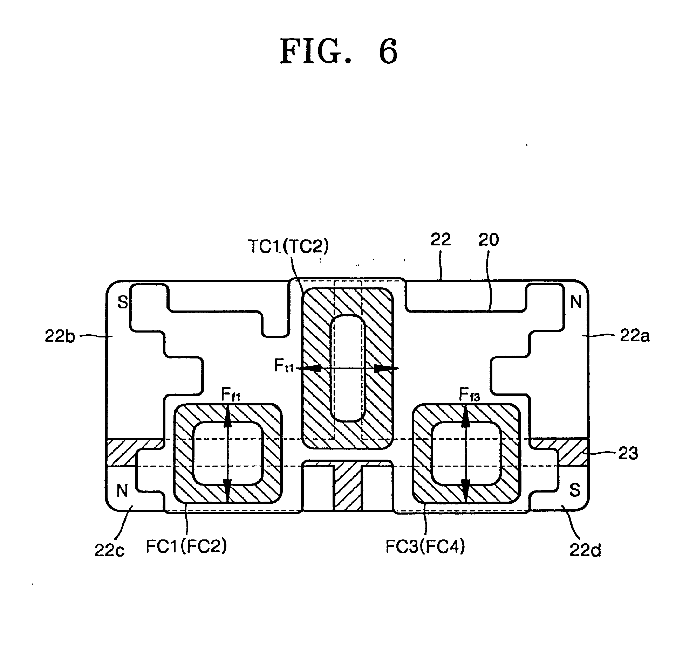

Here, the focus and tilt coils FC1, FC2, FC3, and FC4 and the track coil TC1 and TC2 can be winding coils. Also, as shown in Figure 6, at least one of the focus and tilt coils and the track coils can be a fine pattern coil 20. The fine pattern coil 20 is manufactured by patterning a coil shape on a film and can be very useful in installation of a coil in a small space.

Although the magnet arrangement 22 can have four surface polarization which are divided symmetrically, to secure effective areas of the track coils TC1 and TC2, the first and second surface polarization 22a and 22b corresponding to the track coils TC1 and TC2 can be divided to have areas greater than those of the third and fourth surface polarization 22c and 22d. That is, since the focus and tilt coils FC1, FC2, FC3, and FC4 use all the first through fourth surface polarization 22a, 22b, 22c, and 22d while the track coils TC1 and TC2 use only the first and second surface polarization 22a and 22b, each of areas of the surface polarization can be adjusted for the balance with respect to the focus and tilt coils FC1, FC2, FC3, and FC4.

Also, a neutral zone 22 can be arranged between the respective surface polarization 22a, 22b, 22c, and 22d of the magnet arrangement 22. The neutral zone 22 is provided at a boundary portion between the respective surface polarization to prevent lowering of the overall Lines of magnetic force as the lines of magnetic force are offset at a boundary area where the magnetic poles are opposite.

An outer yoke 25 and an inner yoke 27 may be further provided to guide lines of magnetic force generated by the magnet arrangement 22 in a desired direction.

Next, a method of driving an optical pickup actuator according to a preferred embodiment of the present invention is described below.

At least one focus and tilt coils FC1, FC2, FC3, and FC4 and the track coils TC1 and TC2 are arranged at both side surfaces 15a of the bobbin 15. At least one focus and tilt coil is divided into at least two sets to receive first and second input signals.

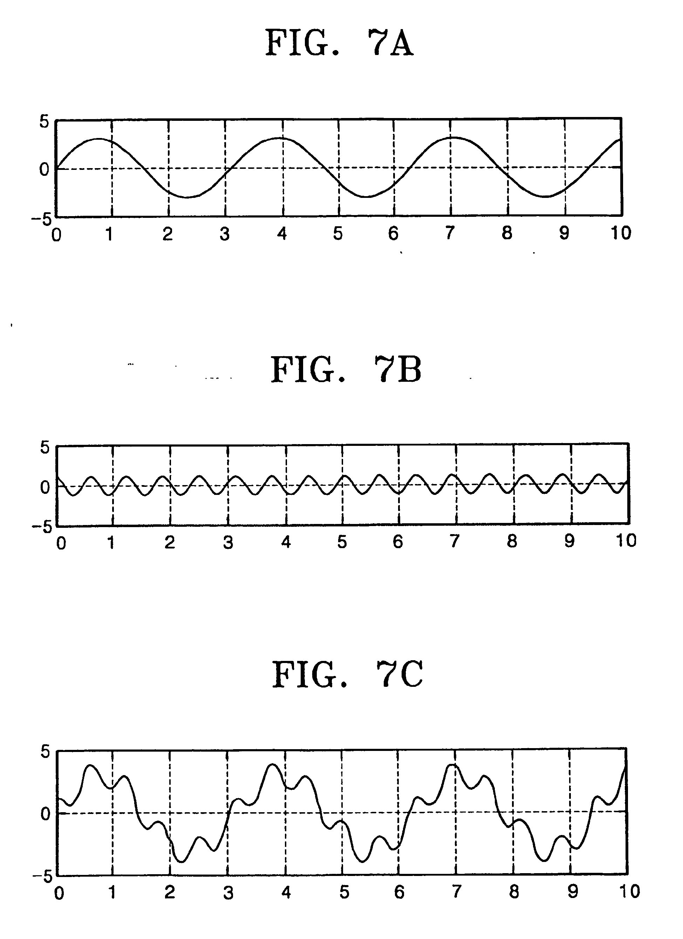

For example, as shown in Figure 7A, when the first and second input signals are focus signals in the same direction, the bobbin 15 moves in the focus direction F. In detail, in the case in which the first and second focus and tilt coils FC1 and FC2 constitute a first set coil and the third and fourth focus and tilt coils FC3 and FC4 constitute a second set coil, when the same signal is applied to both of the first and second set coils, the first through fourth focus and tilt coils FC1, FC2, FC3, and FC4 receive the same forces in the upward or downward direction by the interstepion with the magnet arrangement 22. Thus, the bobbin 15 can be driven in the focus direction F.

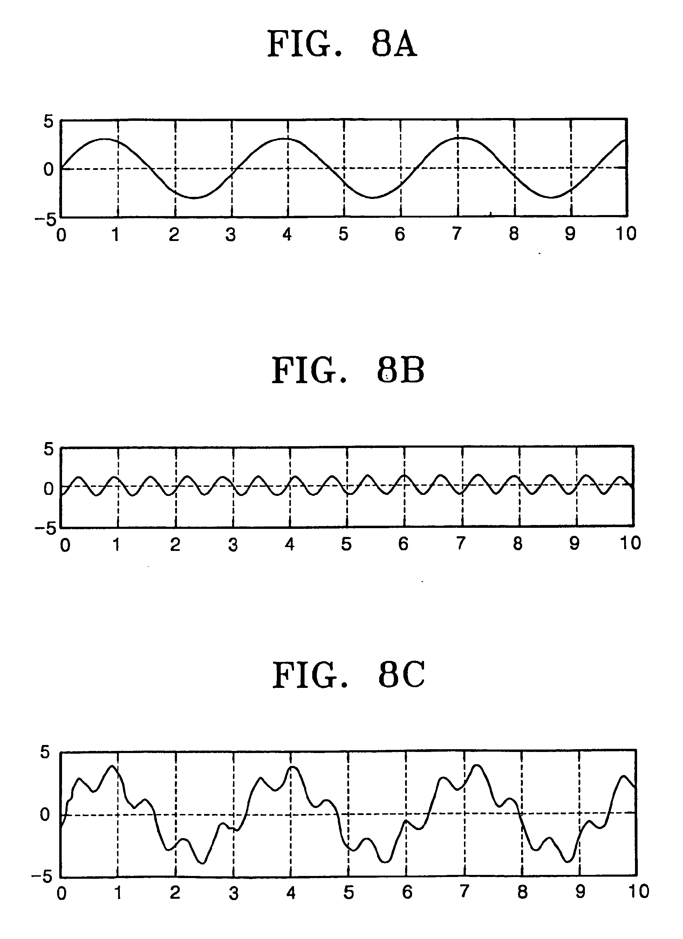

In contrast, when first and second input signals different from each other are input to the first and second focus and tilt coils FC1 and FC2 and the third and fourth focus and tilt coils FC3 and FC4, the focus and tilt coils receive forces in the upward or downward direction that is opposite to each other at the left and right sides. Here, when the first input signal as shown in Figure 7B is input to the first and second focus and tilt coils FC1 and FC2, the second input signal having a phase different from that of the first input signal is input to the third and fourth focus and tilt coils FC3 and FC4, as shown in Figure 8B. Thus, driving of the bobbin 15 in a tilt radial direction Tir can be controlled.

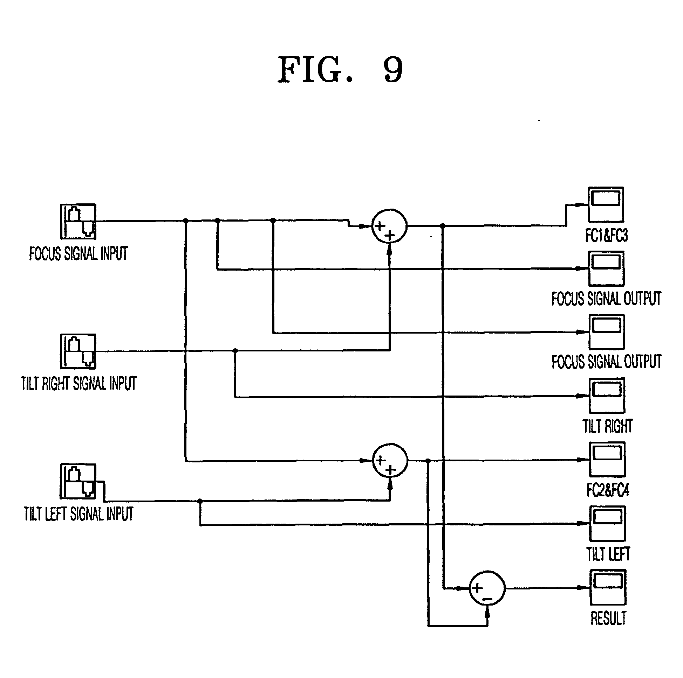

As describe above, by constituting the first and second focus and tilt coils FC1 and FC2 and the third and fourth focus and tilt coils FC3 and FC4 as the first set coil and the second set coil, respectively, driving of the bobbin along three axes of the focus direction F, the track direction T, and the radial tilt direction Tir is possible. Figure 9 is a circuit diagram for the above case.

Unlike the above case, the first and third focus and tilt coils FC1 and FC3 of the first through fourth focus and tilt coils FC1, FC2, FC3, and FC4 may form a first coil set and the second and fourth focus and tilt coils FC2 and FC4 may form a second coil set. Here, when first and second input signals having phases different from each other are input to the first set coil and the second set coil, respectively, driving in the tangential tilt direction Tit is possible.

In addition to the above method of independently controlling driving in the focus direction and driving in the tilt direction, there is a method of simultaneously controlling the driving in the focus direction and the driving in the tilt direction by applying a sum signal of the first and second input signals for driving in the tilt direction as a signal for driving in the focus direction. That is, a sum signal (Figure 7C) of the focus driving signal (Figure 7A) and the first input signal (Figure 7B) for driving in the tilt direction is input to the first set coil. A sum signal (Figure 8C) of the focus driving signal (Figure 8A) and the second input signal (Figure 7C) for driving in the tilt direction is input to the second set coil. Thus, driving in the focus direction F, the tilt radial direction Tir or the tilt radial direction can be controlled simultaneously.

Here, the first set coil is formed of the first and second focus and tilt coils FC1 and FC2 and the second set coil is formed of the third and fourth focus and tilt coils FC3 and FC4. By doing so, the driving in the focus direction F and the driving in the radial tilt direction Tir can be controlled together. Alternatively, the first set coil can be formed of the first and third focus and tilt coils FC1 and FC3 and the second set coil is formed of the second and fourth focus and tilt coils FC2 and FC4. By doing so, the driving in the focus direction F and the driving in the tangential tilt direction Tit can be controlled together.

As another preferred embodiment, there is a method of independently applying a signal to each of the first through fourth focus and tilt coils FC1, FC2, FC3, and FC4. When the focus signal (Figures 7A and 8A) is identically applied to the first through fourth focus and tilt coils, the bobbin 15 move up and down and is driven in the focus direction F.

In contrast, the driving in the tilt radial direction Tir and the driving in the tilt tangential direction Tit can be controlled by selectively inputting an input signal to each of the first through fourth focus and tilt coils FC1, FC2, FC3, and FC4. For example, the and second focus and tilt coils FC1 and F2 of the first through fourth focus and tilt coils FC1, FC2, FC3, and FC4 can form a first set and the third and fourth focus and tilt coils FC1 and FC3 can form a second set. Also, the first and third focus and tilt coils FC1 and FC3 can form a first set and the second and fourth focus and tilt coils FC2 and FC4 can form a second set.

Here, by inputting a predetermined first input signal (Figure 7B) to the first set and the second input signal having a phase different from that of the first input signal to the second set, the driving in the tilt radial direction Tir and in the tilt tangential direction Tit can be selectively controlled.

Also, a sum signal of the focus signal and the first or second input signal for tilt driving can be selectively input to the first through fourth focus and tilt coils FC1, FC2, FC3, and FC4. By doing so, the driving in the focus direction, the driving in the radial tilt direction or the driving in the tangential tilt direction can be controlled together.

In the meantime, the track coils TC1 and TC2 move the bobbin 15 in the track direction T by the interstapion with the first divided pole 22a and the second divided pole 22b. Thus, four axes driving in the focus direction F, the track direction T, the radial tilt direction Tir, and the tangential tilt direction Tit is possible.

The arrangement, of the surface polarization of the magnet arrangement and the coils can be modified beyond the specific examples mentioned above, whilst remaining within the scope of the technical concept of the present invention.

As described above, in the preferred optical pickup actuator driving method according to the present invention, since the focus and tilt coils and the track coils are provided at the opposite side surfaces of the bobbin to secure a free space at the other opposite side surfaces of the bobbin, driving in the focus direction and driving in the tilt direction can be controlled together by a single coil. Therefore, the support member can be easily installed at the other opposite side surfaces of the bobbin and the number of the support member can be reduced. Thus, defective ratio can be lowered and the three axes driving and the four axes driving can be stably implemented.

## Claims

1. A method of driving an optical pickup actuator comprising the steps of:
supporting a bobbin (15) on a base (10) by a support member (30) to be capable of moving at least in a focus direction, a first tilt direction and a track direction;
installing a first, second, third and fourth focus and tilt coils (FC) for driving the bobbin in the focus and the first tilt directions and at least one track coil (TC) for driving the bobbin in the track direction using only a first and a second opposed side surfaces of the bobbin to install the coils such that the first and third focus and tilt coils are arranged on the first side surface of the bobbin and the second and fourth focus and tilt coils are arranged on the second side surface; and
inputting a first and second input signal to a first coil set and a second coil set respectively, each set being formed of a selected couple of the first through fourth focus and tilt coils; and
using a first tilt signal and a second tilt signal having phases different to each other to apply the first and second input signals in order to move the bobbin in the first tilt direction;
**characterised in that** the method includes the steps of:
arranging magnet arrangements (22) to face the focus and tilt coils (FC) and the track coil (TC), wherein the magnet arrangment has a first surface polarization and a second surface polarization in an upper area and a third surface polarization and fourth surface polarization in a face both lower area, the track coil is placed to face both the first surface polarization and the second surface polarization, the first focus and tilt coil is placed to face both the first and fourth surface polarization and the third focus and tilt coil is placed to face both the second and third surface polarizations, and a size of each of the first and second surface polarizations is larger than a size of each of the third and fourth surface polarizations.

2. The method as claimed in claim 1, wherein:
the focus and tilt coils are coupled such that the first coil set comprises the first and third focus and tilt coils (FC1, FC3) and the second coil set comprises the second and fourth focus and tilt coils (FC2, FC4) in order to tilt the bobbin in the track direction.

3. The method as claimed in claim 1, wherein:
the focus and tilt coils are coupled
such that the first coil set comprises the first and second focus and tilt coils (FC1, FC2) and the second coil set comprises the third and fourth focus and tilt coils (FC3, FC4) in order to tilt the bobbin in the radial direction.

4. The method as claimed in any preceding claim, wherein the first tilt input signal is applied to the first coil set and the second tilt input signal is applied to the second coil set in order to tilt the bobbin.

5. The method as claimed in any preceding claim, wherein the method includes the steps of:
generating a focus input signal for moving the bobbin in the focus direction; and
applying the same focus input signal to the first and second coil sets.

6. The method as claimed in claim 5, wherein a sum signal of the focus signal and the first and second tilt signals is applied to the first and second coil sets.

7. The method as claimed in any preceding claim, wherein the magnet arrangement is a magnet arrangement having four polarisations and the method comprises installing the magnet arrangement such that each track coil is arranged to be opposite two opposed polarisations in the track direction and each focus and tilt coil is arranged to be opposite two opposed polarisations in the focus direction.

8. The method as claimed in any preceding claim, wherein the magnet arrangement is at least two magnets each having two polarisations and the method comprises installing the magnet arrangement such that each track coil is arranged to be opposite two opposed polarisations in the track direction and each focus and tilt coil is arranged to be opposite two opposed polarisations in the focus direction.

9. The method as claimed in any preceding claim, wherein an input signal is input to the track coil (TC) independent of the focus and tilt coil (FC).

10. The method as claimed in any preceding claim, wherein at least one of the focus and tilt coil (FC) and the track coil (TC) is formed of a fine pattern coil.

11. The method as claimed in any preceding claim, wherein the method comprises arranging the support member (30) at other opposite side surfaces of the bobbin (15) where the focus and tilt coil (FC) and the track coil (TC) are not arranged.

12. The method as claimed in claim 11, wherein the support member is formed of a wire or a leaf spring.

13. The method as claimed in claim 11 or 12, wherein the number of the support members are at least six.

14. The method as claimed in any preceding, further comprising arranging an outer yoke (25) to which the magnet (22) is fixed and arranging an inner yoke (27) corresponding to the outer yoke.

15. The method as claimed in any preceding claim, comprising mounting an objective lens (14) on the bobbin (15).

16. The method as claimed in any preceding claim, wherein the track coils comprise a single of track coil at each both side of the bobbin.

17. The method as claimed in any preceding claim, the track coils are placed not to be overlapped on the focus coils and the tilt coils.

## Patentansprüche

1. Verfahren zum Treiben eines optischen Abtaststellantriebs, das die folgenden Schritte aufweist:
Stützen einer Spule (15) auf einer Basis (10) durch ein Stützelement (30), um in der Lage zu sein, sich mindestens in eine Fokusrichtung, eine erste Kipprichtung und eine Spurrichtung zu bewegen;
Installieren einer ersten, zweiten, dritten und vierten Fokus- und Kippwicklung (FC) zum Antreiben der Spule in die Fokus- und die erste Kipprichtung, und mindestens eine Spurwicklung (TC) zum Antreiben der Spule in die Spurrichtung, wobei nur eine erste und eine zweite entgegengesetzte Seitenoberfläche der Spule verwendet wird, um die Wicklungen derart zu installieren, dass die erste und dritte Fokus- und Kippwicklung auf der ersten Seitenoberfläche der Spule angeordnet sind, und die zweite und vierte Fokus- und Kippwicklung auf der zweiten Seitenoberfläche angeordnet sind, und
Eingabe eines ersten und zweiten Eingangssignals zu jeweils einem ersten Wicklungssatz und einem zweiten Wicklungssatz, wobei jeder Satz aus einem ausgewählten Paar der ersten bis vierten Fokus- und Kippwicklungen gebildet ist, und
Verwenden eines ersten Kippsignals und eines zweiten Kippsignals, die unterschiedliche Phasen zueinander haben, um das erste und das zweite Eingangssignal anzulegen, um die Spule in die erste Kipprichtung zu bewegen,
**dadurch gekennzeichnet, dass** das Verfahren die folgenden Schritte aufweist:
Anordnen von Magnetanordnungen (22), um der Fokus- und der Kippwicklung (FC) und der Spurwicklung (TC) gegenüberzuliegen, wobei die Magnetanordnung eine erste Oberflächenpolarisation und eine zweite Oberflächenpolarisation in einem oberen Bereich und eine dritte Oberflächenpolarisation und eine vierte Oberflächenpolarisation in einem unteren Bereich hat, wobei die Spurwicklung platziert ist, um sowohl der ersten Oberflächenpolarisation als auch der zweiten Oberflächenpolarisation gegenüberzuliegen, die erste Fokus- und Kippwicklung platziert ist, um sowohl der ersten als auch der vierten Oberflächenpolarisation gegenüberzuliegen, und die dritte Fokus- und Kippwicklung platziert ist, um sowohl der zweiten als auch der dritten Oberflächenpolarisation gegenüberzuliegen, und eine Größe sowohl der ersten als auch der zweiten Oberflächenpolarisation größer ist als eine Größe sowohl der dritten als auch der vierten Oberflächenpolarisation.

2. Verfahren nach Anspruch 1, wobei:
die Fokus- und Kippwicklung gekoppelt sind, so dass der erste Wicklungssatz die erste und die dritte Fokus- und Kippwicklung (FC1, FC3) aufweist, und der zweite Wicklungssatz die zweite und vierte Fokus- und Kippwicklung (FC2, FC4) aufweist, um die Spule in die Spurrichtung zu kippen.

3. Verfahren nach Anspruch 1, wobei:
die Fokus- und Kippwicklung gekoppelt sind,
so dass der erste Wicklungssatz die erste und die zweite Fokus- und Kippwicklung (FC1, FC2) und der zweite Wicklungssatz die dritte und vierte Fokus- und Kippwicklung (FC3, FC4) aufweist, um die Spule in die radiale Richtung zu kippen.

4. Verfahren nach einem der vorhergehenden Ansprüche, wobei das erste Kippeingangssignal an den ersten Wicklungssatz angelegt wird und das zweite Kippeingangssignal an den zweiten Wicklungssatz angelegt wird, um die Spule zu kippen.

5. Verfahren nach einem der vorhergehenden Ansprüche, wobei das Verfahren die folgenden Schritte aufweist:
Erzeugen eines Fokuseingangssignals zum Bewegen der Spule in die Fokusrichtung, und
Anlegen dieses Fokuseingangssignals an den ersten und den zweiten Wicklungssatz.

6. Verfahren nach Anspruch 5, wobei ein Summensignal des Fokussignals und des ersten und zweiten Kippsignals an den ersten und zweiten Wicklungssatz angelegt wird.

7. Verfahren nach einem der vorhergehenden Ansprüche, wobei die Magnetanordnung eine Magnetanordnung ist, die vier Polarisationen hat und das Verfahren das Installieren der Magnetanordnung derart aufweist, dass jede Spurwicklung eingerichtet ist, um zwei entgegengesetzten Polarisationen in die Spurrichtung gegenüberzuliegen, und jede Fokus- und Kippwicklung eingerichtet ist, um zwei entgegengesetzten Polarisationen in die Fokusrichtung gegenüberzuliegen.

8. Verfahren nach einem der vorhergehenden Ansprüche, wobei die Magnetanordnung aus mindestens zwei Magneten besteht, die jeweils zwei Polarisationen haben, und das Verfahren das Installieren der Magnetanordnung derart aufweist, dass jede Spurwicklung eingerichtet ist, um zwei entgegengesetzten Polarisationen in die Spurrichtung gegenüberzuliegen, und jede Fokus- und Kippwicklung eingerichtet ist, um zwei entgegengesetzten Polarisationen in die Fokusrichtung gegenüberzuliegen.

9. Verfahren nach einem der vorhergehenden Ansprüche, wobei ein Eingangssignal zu der Spurwicklung (TC) unabhängig von der Fokus- und Kippwicklung (FC) eingegeben wird.

10. Verfahren nach einem der vorhergehenden Ansprüche, wobei mindestens entweder die Fokus- und Kippwicklung (FC) oder die Spurwicklung (TC) aus einer Feinstrukturwicklung gebildet ist.

11. Verfahren nach einem der vorhergehenden Ansprüche, wobei das Verfahren das Anordnen des Stützelements (30) an anderen entgegengesetzten Seitenoberflächen der Spule (15) aufweist, wenn die Fokus- und Kippwicklung (FC) und die Spurwicklung (TC) nicht eingerichtet sind.

12. Verfahren nach Anspruch 11, wobei das Stützelement aus einem Draht oder einer Blattfeder ausgebildet ist.

13. Verfahren nach Anspruch 11 oder 12, wobei die Anzahl der Stützelemente mindestens sechs beträgt.

14. Verfahren nach einem der vorhergehenden Ansprüche, das ferner das Anordnen eines äußeren Jochs (25), an dem der Magnet (22) befestigt ist, und Anordnen eines inneren Jochs (27), das dem äußeren Joch entspricht, aufweist.

15. Verfahren nach einem der vorhergehenden Ansprüche, das das Montieren eines Objektivs (14) auf die Spule (15) aufweist.

16. Verfahren nach einem der vorhergehenden Ansprüche, wobei die Spurwicklungen eine einzelne Spurwicklung an jeder Seite der Spule umfassen.

17. Verfahren nach einem der vorhergehenden Ansprüche, wobei die Spurwicklungen platziert werden, ohne sich auf den Fokus- und Kippwicklungen zu überlagern.

## Revendications

1. Procédé d'entraînement d'un actionneur de tête optique comprenant les étapes consistant à :
faire en sorte qu'une bobine (15) soit supportée sur un socle (10) par un élément de support (30) afin qu'elle soit capable de se déplacer dans au moins une direction de focalisation, une première direction d'inclinaison et une direction de poursuite ;
installer des premier, deuxième, troisième et quatrième bobinages de focalisation et d'inclinaison (FC) pour entraîner la bobine dans les directions de focalisation et de première inclinaison et au moins un bobinage de poursuite (TC) destiné à entraîner la bobine dans la direction de poursuite en n'utilisant que des première et deuxième surfaces latérales opposées de la bobine pour installer les bobinages de telle manière que les premier et troisième bobinages de focalisation et d'inclinaison soient disposés sur la première surface latérale de la bobine et que les deuxième et quatrième bobinages de focalisation et d'inclinaison soient disposés sur la deuxième surface latérale ; et
fournir respectivement en entrée des premier et deuxième signaux d'entrée à un premier ensemble de bobinages et à un deuxième ensemble de bobinages, chaque ensemble étant formé sur un couple sélectionné des premier à quatrième bobinages de focalisation et d'inclinaison ; et
utiliser un premier signal d'inclinaison et un deuxième signal d'inclinaison ayant des phases différentes l'une de l'autre pour appliquer les premier et deuxième signaux d'entrée afin de déplacer la bobine dans la première direction d'inclinaison ;
**caractérisé en ce que** le procédé comprend les étapes consistant à :
disposer des dispositifs à aimants (22) en face des bobinages de focalisation et d'inclinaison (FC) et de l'bobinage de poursuite (TC), le dispositif à aimants présentant une première polarisation de surface et une deuxième polarisation de surface dans une zone supérieure et une troisième polarisation de surface et une quatrième polarisation de surface dans une zone inférieure, l'bobinage de poursuite étant placé à la fois en face de la première polarisation de surface et de la deuxième polarisation de surface, le premier bobinage de focalisation et d'inclinaison étant placé à la fois en face des première et quatrième polarisations de surface et le troisième bobinage de focalisation et d'inclinaison étant placé à la fois en face des deuxième et troisième polarisations de surface, et la taille de chacune des première et deuxième polarisations de surface étant supérieure à la taille de chacune des troisième et quatrième polarisations de surface.

2. Procédé selon la revendication 1, dans lequel :
les bobinages de focalisation et d'inclinaison sont couplés de manière à ce que le premier ensemble de bobinages comprenne les premier et troisième bobinages de focalisation et d'inclinaison (FC1, FC3) et à ce que le deuxième ensemble de bobinages comprenne les deuxième et quatrième bobinages de focalisation et d'inclinaison (FC2, FC4) afin d'incliner la bobine dans la direction de poursuite.

3. Procédé selon la revendication 1, dans lequel :
les bobinages de focalisation et d'inclinaison sont couplés de manière à ce que le premier ensemble de bobinages comprenne les premier et deuxième bobinages de focalisation et d'inclinaison (FC1, FC2) et que le deuxième ensemble de bobinages comprenne les troisième et quatrième bobinages de focalisation et d'inclinaison (FC3, FC4) afin d'incliner la bobine dans la direction radiale.

4. Procédé selon l'une quelconque des revendications précédentes, dans lequel le premier signal d'entrée d'inclinaison est appliqué au premier ensemble de bobinages et le deuxième signal d'entrée d'inclinaison est appliqué au deuxième ensemble de bobinages afin d'incliner la bobine.

5. Procédé selon l'une quelconque des revendications précédentes, dans lequel le procédé comprend les étapes consistant à :
générer un signal d'entrée de focalisation pour déplacer la bobine dans la direction de focalisation ; et
appliquer le même signal d'entrée de focalisation aux premier et deuxième ensembles de bobines.

6. Procédé selon la revendication 5, dans lequel un signal de somme du signal de focalisation et des premier et deuxième signaux d'inclinaison est appliqué aux premier et deuxième ensembles de bobinages.

7. Procédé selon l'une quelconque des revendications précédentes, dans lequel le dispositif à aimants est un dispositif à aimants présentant quatre polarisations et le procédé comprend l'installation du dispositif à aimants de manière à ce que chaque bobinage de poursuite soit disposé de manière opposée à deux polarisations opposées dans la direction de poursuite et que chaque bobinage de focalisation et d'inclinaison soit disposé de manière opposée à deux polarisations opposées dans la direction de focalisation.

8. Procédé selon l'une quelconque des revendications précédentes, dans lequel le dispositif à aimants est constitué d'au moins deux aimants ayant chacun deux polarisations et dans lequel le procédé comprend l'installation du dispositif à aimants de manière à ce que chaque bobinage de poursuite soit disposé de manière opposée à deux polarisations opposées dans la direction de poursuite et que chaque bobinage de focalisation et d'inclinaison soit disposé de manière opposée à deux polarisations opposées dans la direction de focalisation.

9. Procédé selon l'une quelconque des revendications précédentes, dans lequel un signal d'entrée est fourni en entrée à l'bobinage de poursuite (TC) indépendamment de l'bobinage de focalisation et d'inclinaison (FC).

10. Procédé selon l'une quelconque des revendications précédentes, dans lequel au moins l'un de l'bobinage de focalisation et d'inclinaison (FC) et de l'bobinage de poursuite (TC) est formé d'un bobinage à motif fin.

11. Procédé selon l'une quelconque des revendications précédentes, dans lequel le procédé comprend la disposition de l'élément de support (30) sur d'autres surfaces latérales opposées de la bobine (15) sur lesquelles ne sont pas disposés l'bobinage de focalisation et d'inclinaison (FC) et l'bobinage de poursuite (TC).

12. Procédé selon la revendication 11, dans lequel l'élément de support est formé d'un fil et d'un ressort à lame.

13. Procédé selon la revendication 11 ou 12, dans lequel le nombre d'éléments de support est d'au moins six.

14. Procédé selon l'une quelconque des revendications précédentes, comprenant en outre la disposition d'un culasse extérieure (25) à laquelle est fixé l'aimant (22) et la disposition d'une culasse intérieure (27) correspondant à la culasse extérieure.

15. Procédé selon l'une quelconque des revendications précédentes, comprenant le montage d'un objectif (14) sur la bobine (15).

16. Procédé selon l'une quelconque des revendications précédentes, dans lequel les bobinages de poursuite comprennent un bobinage de poursuite unique de chaque côté de la bobine.

17. Procédé selon l'une quelconque des revendications précédentes, les bobinages de poursuite étant placés de manière à ne pas se superposer aux bobinages de focalisation et aux bobinages d'inclinaison.
